# EUROPEAN PATENT APPLICATION

(11) **EP 4 052 973 A1**
(43) Date of publication of application: **07.09.2022**
(21) Application number: 19950597.5
(22) Date of filing: 06.12.2019
(51) Int. Cl.: B60S 1/38, B60S 1/40

(54) **VEHICLE WIPER**

(30) Priority: 28.10.2019 KR 20190134697
(71) Applicant: A-Lab. Co., Ltd., Siheung-si, Gyeonggi-do 15116 (KR); Kim, Hak Tae, Yongin-si, Gyeonggi-do 16822 (KR)
(72) Inventor: KIM, Hak Tae, Yongin-si, Gyeonggi-do 16822 (KR)
(74) Representative: Hauck Patentanwaltspartnerschaft mbB
(86) International application number: PCT/KR2019/017178
(87) International publication number: WO 2021/085736

(57) **Abstract**

The present invention provides a wiper for a vehicle including: an adapter mounted on a wiper operation arm; an adapter holder configured to hold the adapter; a frame holder coupled to the adapter holder; left and right primary levers disposed on left and right ends of the frame holder, whose respective one ends are detachably coupled to the left and right ends of the frame holder; left and right secondary levers respectively connected to the other ends of the left and right primary levers by two lever joints; four tertiary levers having couplers respectively formed thereon; and a blade of a rubber material, wherein each of the left and right primary levers, and the left and right secondary levers is made of an elastic leaf spring of a metal material, and the four tertiary levers are made of elastic engineering plastic.

## Description

### [BACKGROUND OF THE INVENTION]

### 1. Field of the Invention

The present invention relates to a wiper for a vehicle, and specifically, to a wiper for a vehicle that can perform a wiping operation with being elastically in close contact with a windshield of the vehicle, decrease the number of parts to reduce manufacturing costs, and increase productivity by facilitating an assembly thereof.

### 2. Description of the Related Art

A wiper for a vehicle is a device for wiping rain or foreign matters flowing down a windshield of the vehicle when it rains, and is configured so that a wiper operation arm, which receives a driving force of a wiper motor installed in an engine room through a link mechanism, reciprocates at a predetermined angle. A wiper assembly having a blade made of a rubber material attached to one side thereof is detachably installed at a tip of the wiper operation arm

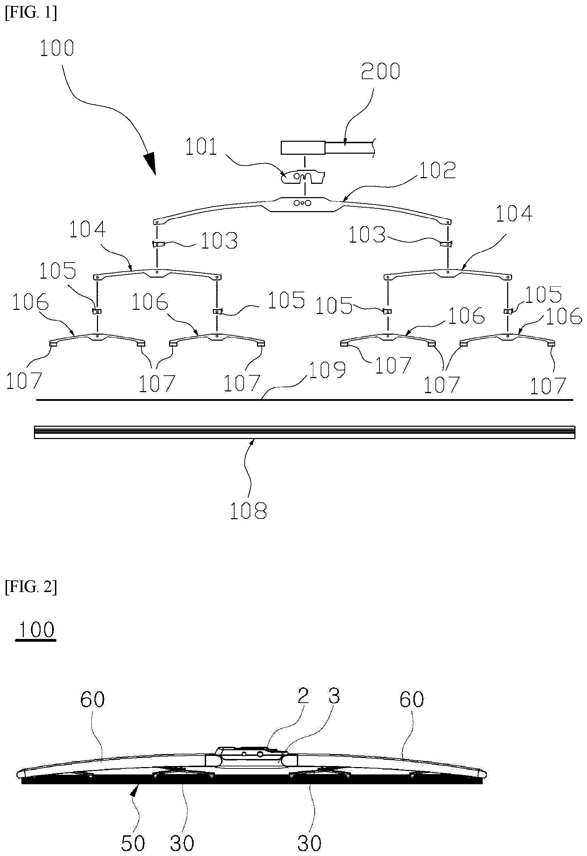

FIG. 1 is an exploded perspective view illustrating respective components of a conventional wiper for a vehicle.

As illustrated in FIG. 1, a conventional wiper 100 for a vehicle detachably mounted to a wiper operation arm includes: a frame body 102 to which an adapter 101, to which a tip of a wiper operation arm 200 is mounted, is coupled; rivet joints 103 symmetrically assembled to both ends of the frame body 102; a pair of first frames 104 rotatably assembled at each of the both-side rivet joints 103 symmetrically assembled to the both ends of the frame body 102, and a plurality of pairs of second frames 106 rotatably assembled to both ends of the pair of first frames 104 in a symmetric manner, respectively; a blade 108 made of a rubber material horizontally inserted into clawed brackets 107 formed at both ends of each of the plurality of pairs of second frames 106 so as to be replaceable; and plate-shaped metal spring rails 109 buried in both sides of the blade 108 to exert an elastic force so that the blade 108 comes elastically in close contact with a surface of the vehicle's windshield.

The conventional wiper 100 for a vehicle having the above-described configuration receives a kinetic force from the wiper operation arm 200, and in order to finally convert it into a trajectory motion of the blade 108 through the link mechanism, is configured in such a way that forces acting on the wiper operation arm 200, the blade 108, and the metal spring rails 109 for providing a constant elastic strength to the blade 108, etc., are concentrated on one place, so as to operate the blade by driving the wiper operation arm 200. In addition, the first and second frames 104 and 106 are arranged in an even distribution on the frame body 102, and the frame body 102 is configured to have a plurality of holes perforated therein in order to promote drainage of water and reduce a weight.

In addition, the blade 108 is configured to have stepped portions formed therein in a horizontal direction so as to be horizontally inserted into the clawed brackets 107 formed at both ends of the second frame 106, and slide insertion grooves symmetrically formed therein so that the metal spring rails 109 may be inserted in the horizontal direction.

However, the conventional wiper 100 for a vehicle having the above-described configuration is formed by assembling the frame main body 102 press-molded using a steel plate as a material, the first and second frames 104 and 106, the metal spring rails 109 on both sides of the blade 108 made of a rubber material. Therefore, such a structure has problems that a phenomenon, in which connection portions and joint portions of the respective components are frozen, occurs in winter thereby a normal operation of the wiper is impossible, and a defect such as elastic deformation of the blade occurs, such that the surface of the vehicle's windshield cannot be normally wiped.

Further, the conventional wiper assembly has a structure in which portions for elastically pressing the blade consists of respective points based on the plurality of rivet joints 105, such that it is difficult to transmit a pressing force to the entire blade 108 with an equal distribution load. As a result, not only a remarkable partial difference in a wear rate of the blade 108 occurs, but also a phenomenon, in which the entire surface of the vehicle's windshield cannot be uniformly wiped due to a separation caused by lifting of the blade, occurs.

In addition, since the conventional wiper 100 for a vehicle requires parts such as the rivet joint 105 in order to couple the first frame 104 and the second frame 106, an assembly thereof is inconvenient and time-consuming, thereby causing an increase in manufacturing costs, and a decrease in productivity.

### [Prior Art Document]

### [Patent Document]

(Patent Document 1) Korean Utility Model Registration No. 20-0282487 (published on July 22, 2002)
(Patent Document 2) Korean Patent Registration No. 10-0616259 (published on August 21, 2006)
(Patent Document 3) Korean Patent Registration No. 10-0682841 (published on Feburay 15, 2007)
(Patent Document 4) Korean Patent Registration No. 10-1691427 (published on January 09, 2017)

### [SUMMARY OF THE INVENTION]

In consideration of the above-mentioned circumstances, it is an object of the present invention to provide a wiper for a vehicle that can perform a wiping operation with being elastically in close contact with a windshield of the vehicle, decrease the number of parts to reduce manufacturing costs, and increase productivity by facilitating an assembly thereof.

To achieve the above object, according to an aspect of the present invention, there is provided a wiper for a vehicle including: an adapter mounted on a wiper operation arm; an adapter holder configured to hold the adapter; a frame holder coupled to the adapter holder so that the adapter holder and the adapter held therein are upwardly exposed; left and right primary levers disposed on left and right ends of the frame holder, whose respective one ends facing each other are detachably coupled to the left and right ends of the frame holder; left and right secondary levers respectively connected to the other ends of the left and right primary levers by two lever joints; four tertiary levers having couplers respectively formed thereon with protruding so as to be fitted into each of four coupling clips formed at both ends of each of the left and right secondary levers; and a blade of a rubber material, which is horizontally assembled to eight clawed brackets formed at both ends of each of the four tertiary levers, wherein each of the left and right primary levers, and the left and right secondary levers is made of an elastic leaf spring of a metal material, and the four tertiary levers are made of elastic engineering plastic.

Herein, each of the left and right primary levers and the left and right secondary levers may have a cross section bent in any one shape selected from an inverted V shape and an arc shape.

In addition, the lever joint may include: an upper joint disposed on the other end of each of the left and right primary levers; and a lower joint disposed beneath each of the left and right secondary levers, wherein the left and right primary levers have first through holes formed in the other ends thereof with vertically penetrating, the left and right secondary levers have second through holes formed in central portions thereof with vertically penetrating, the upper joint or the lower joint has an insert protrusion formed thereon to pass through the first through hole and the second through hole, and the lower joint or the upper joint has an insert groove formed therein corresponding to the insert protrusion.

Further, the coupling clips respectively formed at both ends of the left and right secondary levers may include: a guide part having two branched sections which extend outward from the both ends of the left and right secondary levers in a predetermined length along a longitudinal direction of the secondary lever, and is formed in a shape in which a width between the branched sections is increased outward from the both ends of the secondary levers; and a clip hole formed between the branched sections of the guide part adjacent to the both ends of the secondary lever while one side thereof is opened toward the guide part to define an opening, in a shape whose diameter is decreased outward from the both ends of the secondary lever, so that the coupler guided by the guide part is inserted and fixed.

Further, the coupler may include: a coupling part formed thereon with protruding upward from an upper end of the tertiary lever; and a latch part which is formed thereon with extending upward from an upper side of the coupling part, and has a larger diameter than the coupling part, so as to prevent the left and right secondary levers from being detached upward.

Furthermore, when arranging the left and right secondary levers and the tertiary lever to be orthogonal to each other, the coupling part may be formed to have a diameter in a longitudinal direction of the tertiary lever smaller than the diameter of the clip hole, so as to fit the guide part into the clip hole through the guide part, and in a state in which the coupling part is fitted into the clip hole, when rotating the left and right secondary levers or the tertiary lever to arrange the left and right secondary levers and the tertiary lever on the same line, the coupling part may be formed to have a diameter in a width direction of the tertiary lever larger than the diameter of the clip hole, thus to prevent the coupling part from being separated from the clip hole.

According to the solutions to solve the above-mentioned problems, the present invention has the following effects.

According to the present invention, each of the left and right secondary levers has the coupling clips formed at both ends thereof, and the tertiary levers have the couplers formed at the upper ends thereof with protruding, which are fitted into the coupling clips, respectively, so as to decrease the number of parts to reduce the manufacturing costs, and increase productivity by facilitating an assembly thereof.

In addition, according to the present invention, the primary lever and the secondary lever are made of an elastic leaf spring of a metal material, and the tertiary lever made of elastic engineering plastic, thereby performing a wiping operation with being elastically in close contact with a windshield of the vehicle.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is an exploded perspective view illustrating respective components of a conventional wiper for a vehicle;
FIG. 2 is a front view illustrating a wiper for a vehicle according to the present invention;
FIG. 3 is an exploded perspective view illustrating components of the wiper for a vehicle illustrated in FIG 2;
FIG. 4 is a perspective view illustrating a state in which a left primary lever is coupled to a frame holder in the wiper for a vehicle according to the present invention;
FIG. 5 is a perspective view illustrating a state in which a right primary lever is separated from the frame holder in the wiper for a vehicle according to the present invention;
FIG. 6 is a cross-sectional view taken on line A-A in FIG. 3;
FIG. 7 is a perspective view illustrating a state in which the left primary lever and a left secondary lever are coupled by a lever joint in the wiper for a vehicle according to the present invention;
FIG. 8 is an exploded perspective view of the lever illustrated in FIG. 7;
FIG. 9 is a cross-sectional view taken on line B-B in FIG. 3;
FIG. 10 is a perspective view illustrating a tertiary lever in the wiper for a vehicle according to the present invention;
FIG. 11 is a perspective view and a partially enlarged view illustrating a state in which the secondary lever and the tertiary lever are arranged to be orthogonal to each other in the wiper for a vehicle according to the present invention;
FIG. 12 is a perspective view and a partially enlarged view illustrating a state in which a coupler formed in the tertiary lever is coupled to a coupling clip formed in the secondary lever with the secondary lever and the tertiary lever being arranged to be orthogonal to each other in the wiper for a vehicle according to the present invention;
FIG. 13 is a perspective view and a partially enlarged view illustrating a state in which the secondary lever and the tertiary lever are arranged on the same line with the coupler formed in the tertiary lever being coupled to the coupling clip formed in the secondary lever in the wiper for a vehicle according to the present invention;
FIG. 14 is views illustrating the tertiary lever in the wiper for a vehicle according to the present invention, wherein (a) is a front view illustrating a state viewed from a front, and (b) is a side view illustrating a state viewed from a side; and
FIG. 15 is views illustrating the left cover and the frame holder in the wiper for a vehicle according to the present invention, wherein (a) is a perspective view illustrating a state in which the left cover and the frame holder are separated from each other, and (b) is a perspective view illustrating a state in which the left cover and the frame holder are coupled to each other.

### [DETAILED DESCRIPTION OF THE INVENTION]

Hereinafter, a wiper for a vehicle according to the present invention will be described in detail with reference to the accompanying drawings. For reference, the terms and words used in the present disclosure and claims of the present invention should not be construed as limited to a lexical meaning, and should be understood as appropriate notions by the inventor based on that he/she is able to define terms to describe his/her invention in the best way to be seen by others. In addition, embodiments and drawings described in the present disclosure are only the most preferred embodiment and do not represent all the technical sprites of the present invention, and it will be understood that various modifications and equivalents may be made to take the place of the embodiments at the time of filling the present application.

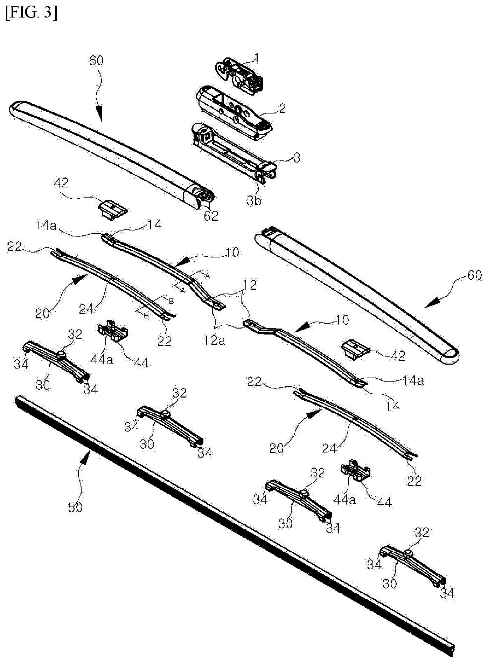

FIG. 2 is a front view illustrating a wiper for a vehicle according to the present invention, and FIG. 3 is an exploded perspective view illustrating components of the wiper for a vehicle illustrated in FIG 2.

As illustrated in FIGS. 2 and 3, a wiper 100 for a vehicle according to the present invention includes an adapter 1, an adapter holder 2, a frame holder 3, left and right primary levers 10, left and right secondary levers 20, four tertiary levers 30, lever joints 40, a blade 50 and covers 60.

The adapter 1 is mounted on a wiper operation arm, the adapter holder 2 is configured to house and hold the adapter 1, and the frame holder 3 is coupled to the adapter holder 2 so that the adapter holder 2 and the adapter 1 held therein are upwardly exposed.

The frame holder 3 has coupling protrusions 3a formed on a lower surface thereof to be inserted into coupling holes 12a formed in one end 12 of each of the primary levers 10 to be described below, and fastening grooves 3b formed on both ends thereof, to which fastening protrusions 62 formed on the covers 60 are fastened.

In addition, the blade 50 is made of a rubber material, and is assembled to eight blade clawed brackets 34 formed at both ends of each of the four tertiary levers 30 to be described below with being inserted in a horizontal direction.

Further, it is preferable that the left and right primary levers 10 and the left and right secondary levers 20 to be described below are made of an elastic leaf spring of a metal material, respectively, and the four tertiary levers 30 are made of elastic engineering plastic.

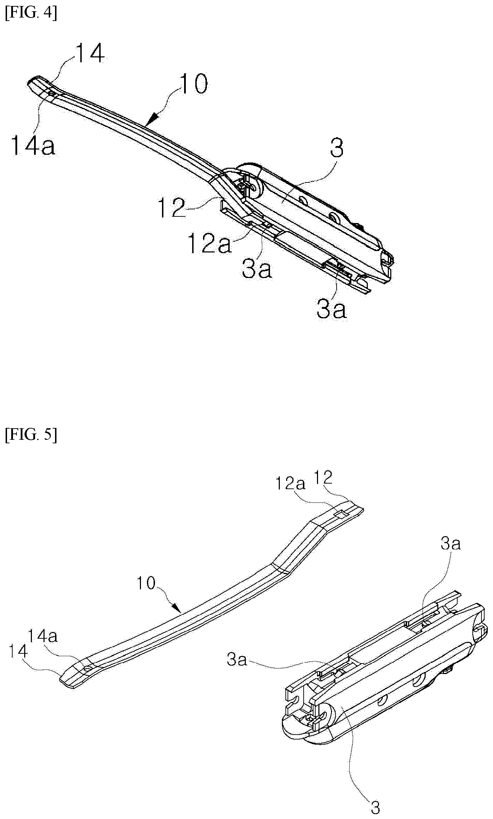

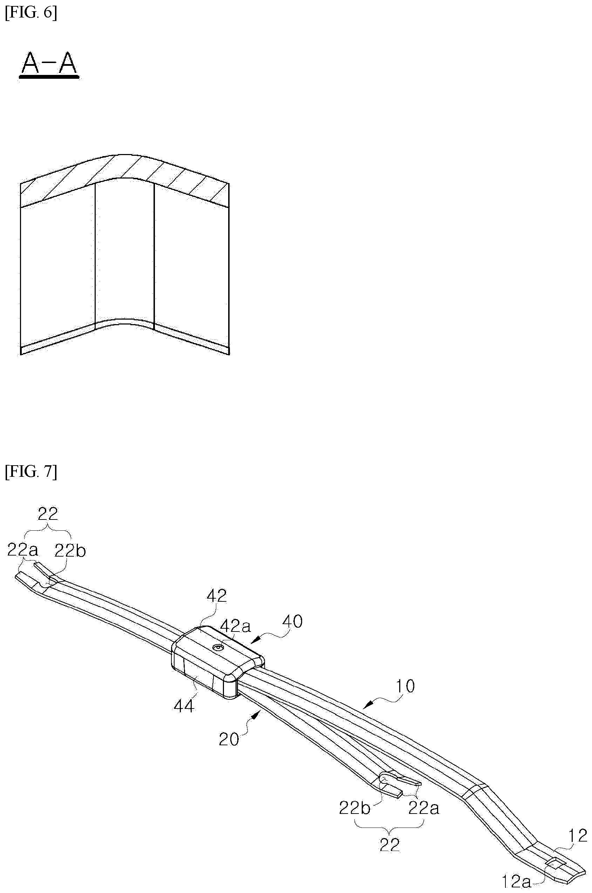

FIG. 4 is a perspective view illustrating a state in which the left primary lever is coupled to the frame holder in the wiper for a vehicle according to the present invention, FIG. 5 is a perspective view illustrating a state in which the right primary lever is separated from the frame holder in the wiper for a vehicle according to the present invention, and FIG. 6 is a cross-sectional view taken on line A-A in FIG. 3.

The left and right primary levers 10 are respectively disposed on left and right ends of the frame holder 3 so that the respective ends 12 facing each other are detachably coupled to the left and right ends of the frame holder 3.

Specifically, as illustrated in FIGS. 4 and 5, the left and right primary levers 10 respectively have a coupling hole 12a formed at one end 12 thereof with vertically penetrating, and the frame holder 3 has the coupling protrusions 3a formed on the lower surface thereof in a hook shape corresponding to the coupling holes 12a.

At this time, as illustrated in FIG. 6, the left and right primary levers 10 may have a cross section formed in an arc shape, and in another configuration, it may have a cross section bent in an inverted V shape.

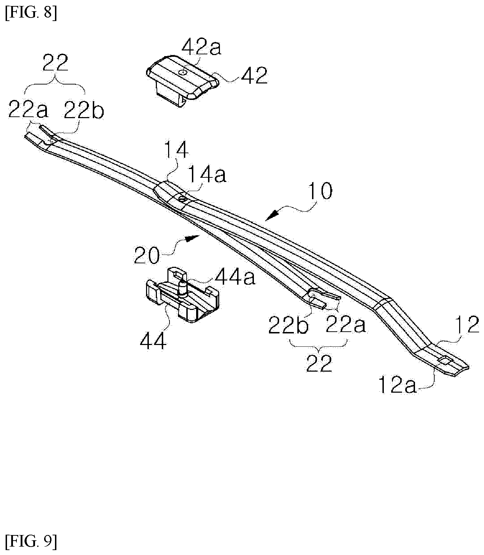

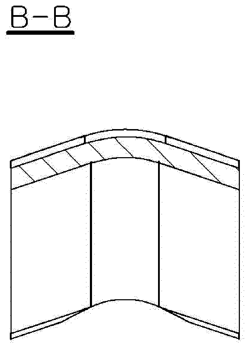

FIG. 7 is a perspective view illustrating a state in which the left primary lever and the left secondary lever are coupled by the lever joint in the wiper for a vehicle according to the present invention, FIG. 8 is an exploded perspective view of the lever illustrated in FIG. 7, and FIG. 9 is a cross-sectional view taken on line B-B in FIG. 3.

As illustrated in FIG. 7, the left and right secondary levers 20 are respectively connected to the other end 14 of each of the left and right primary levers 10 by two lever joints 40.

As illustrated in FIG. 8, such a lever joint 40 includes: an upper joint 42 disposed on the other end 14 of each of the left and right primary levers 10; and a lower joint 44 disposed beneath each of the left and right secondary levers 20.

In addition, the left and right primary levers 10 have first through holes 14a formed in the other ends 14 thereof with vertically penetrating, and the left and right secondary levers 20 have second through holes 24 formed in central portions thereof with vertically penetrating. The lower joint 44 has an insert protrusion 44a formed thereon to pass through the first through hole 14a, and the upper joint 42 has an insert groove 42a formed therein corresponding to the insert protrusion 44a. Similarly, the lower joint 44 may have the insert groove formed therein, and the upper joint 42 may have the insert protrusion formed thereon.

At this time, as illustrated in FIG. 9, the left and right secondary levers 20 may have a cross section formed in an arc shape, or may have a cross section bent in an inverted V shape.

As illustrated in FIG. 8, left and right portions of each of the left and right secondary levers 20 are formed symmetrically on the basis of the second through hole 24 in terms of a length, an inclined angle and the like.

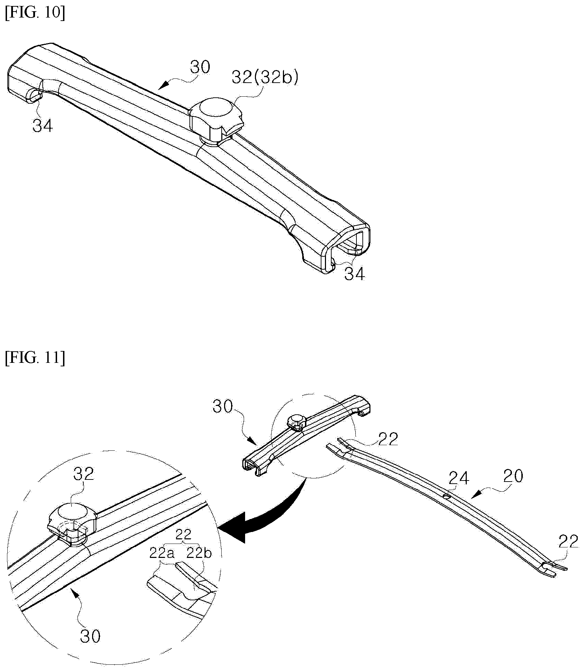

FIG. 10 is a perspective view illustrating the tertiary lever in the wiper for a vehicle according to the present invention.

The wiper has four tertiary levers 30, each of which is fitted into four coupling clips 22 formed at both ends of each of the left and right secondary levers 20, and each of which has a coupler 32 formed thereon with protruding as illustrated FIG. 10.

The coupler 32 may include: a coupling part 32a formed thereon with protruding upward from an upper end of the tertiary lever 30; and a latch part 32b which is formed thereon with extending upward from an upper side of the coupling part 32a, and has a larger diameter than the coupling part 32a, so as to prevent the left and right secondary levers 20 from being detached upward.

As described above, the coupling clips 22 are formed at both ends of each of the left and right secondary levers 20, and the couplers 32 protrude from the upper ends of the tertiary lever 30 to be fitted into the coupling clips 22, respectively. Thereby, the wiper of the present invention has advantages of decreasing the number of parts to reduce the manufacturing costs, and increasing the productivity by facilitating an assembly thereof.

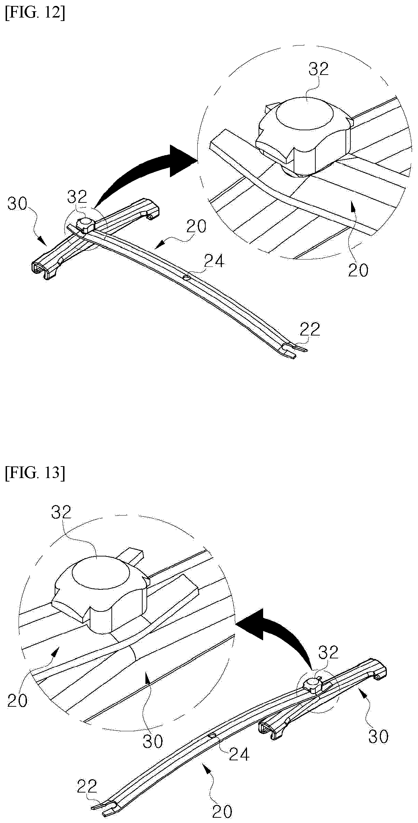

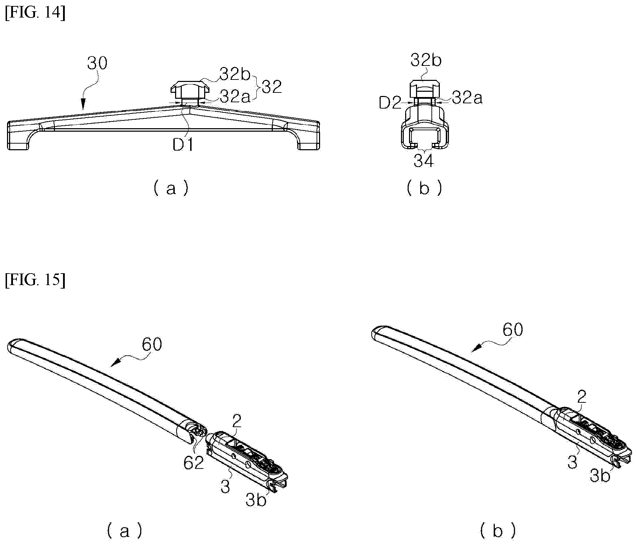

FIG. 11 is a perspective view and a partially enlarged view illustrating a state in which the secondary lever and the tertiary lever are arranged to be orthogonal to each other in the wiper for a vehicle according to the present invention, FIG. 12 is a perspective view and a partially enlarged view illustrating a state in which the coupler formed in the tertiary lever is coupled to the coupling clip formed in the secondary lever with the secondary lever and the tertiary lever being arranged to be orthogonal to each other in the wiper for a vehicle according to the present invention, FIG. 13 is a perspective view and a partially enlarged view illustrating a state in which the secondary lever and the tertiary lever are arranged on the same line with the coupler formed in the tertiary lever being coupled to the coupling clip formed in the secondary lever in the wiper for a vehicle according to the present invention, and FIG. 14 is views illustrating the tertiary lever in the wiper for a vehicle according to the present invention, wherein (a) is a front view illustrating a state viewed from a front, and (b) is a side view illustrating a state viewed from a side.

The coupling clips 22 respectively formed at both ends of the left and right secondary levers 20 include a guide part 22a and a clip hole 22b.

The guide part 22a has two branched sections which extend outward from the both ends of the left and right secondary levers 20 in a predetermined length along a longitudinal direction of the secondary lever 20, and is formed in a shape in which a width between the branched sections is increased outward from the both ends of the secondary levers 20.

In addition, the clip hole 22b is formed between the branched sections of the guide part 22a adjacent to the both ends of the secondary lever 20 while one side thereof is opened toward the guide part 22a to define an opening, in a shape whose diameter is decreased outward from the both ends of the secondary lever 20, so that the coupler 32 guided by the guide part 22a is inserted and fixed.

When arranging the left and right secondary levers 20 and the tertiary lever 30 to be orthogonal to each other as illustrated in FIG. 11, the coupling part 32a is formed to have a diameter D1 in the longitudinal direction of the tertiary lever 30 smaller than the diameter of the clip hole 22b as illustrated in FIG. 14(a), so as to fit the guide part 22a into the clip hole 22b through the guide part 22a.

In addition, in a state in which the coupling part 32a is fitted into the clip hole 22b as illustrated in FIG. 12, when rotating the left and right secondary levers 20 or the tertiary lever 30 to arrange the left and right secondary levers 20 and the tertiary lever 30 on the same line as illustrated in FIG. 13, the coupling part 32a is formed to have a diameter D2 in a width direction of the tertiary lever 30 larger than the diameter of the clip hole 22b, that is, a width between the branched sections of the guide part 22a corresponding to the opening of the clip hole 22b as illustrated in FIG. 14(b). Thereby, it is possible to prevent the coupling part 32a from being separated from the clip hole 22b.

FIG. 15 is views illustrating the left cover and the frame holder in the wiper for a vehicle according to the present invention, wherein (a) is a perspective view illustrating a state in which the left cover and the frame holder are separated from each other, and (b) is a perspective view illustrating a state in which the left cover and the frame holder are coupled to each other.

The cover 60 is configured to house and protect the primary lever 10, the secondary lever 20 and the tertiary lever 30. The wiper of the present invention has a pair of covers, which are coupled to both ends of the frame holder 3, respectively.

For this, the fastening protrusions 62 are formed on inner surfaces of one end of the cover 60, and the fastening grooves 3b are formed in outer surfaces of both end of the frame holder 3 at positions corresponding to the fastening protrusions 62.

The present invention described above is not limited to the configurations described in the above embodiments and illustrated in the accompanying drawings, and it will be understood by those skilled in the art that various substitutions, modifications and variations may be made without departing from the technical spirit of the present invention.

### [Description of Reference Numerals]

1: Adapter
2: Adapter holder
3: Frame holder
10: Left and right primary lever
20: Left and right secondary levers
30: Tertiary lever
32: Coupler
40: Lever joint
50: Blade
60: Cover
100: Wiper for a vehicle

## Claims

1. A wiper for a vehicle comprising: an adapter mounted on a wiper operation arm; an adapter holder configured to hold the adapter; a frame holder coupled to the adapter holder so that the adapter holder and the adapter held therein are upwardly exposed; left and right primary levers disposed on left and right ends of the frame holder, whose respective one ends facing each other are detachably coupled to the left and right ends of the frame holder; left and right secondary levers respectively connected to the other ends of the left and right primary levers by two lever joints; four tertiary levers having couplers respectively formed thereon with protruding so as to be fitted into each of four coupling clips formed at both ends of each of the left and right secondary levers; and a blade of a rubber material, which is horizontally assembled to eight blade clawed brackets formed at both ends of each of the four tertiary levers,
wherein each of the left and right primary levers, and the left and right secondary levers is made of an elastic leaf spring of a metal material, and
the four tertiary levers are made of elastic engineering plastic.

2. The wiper for a vehicle according to claim 1, wherein each of the left and right primary levers and the left and right secondary levers has a cross section bent in any one shape selected from an inverted V shape and an arc shape.

3. The wiper for a vehicle according to claim 1, wherein the lever joint comprises:
an upper joint disposed on the other end of each of the left and right primary levers; and
a lower joint disposed beneath each of the left and right secondary levers,
wherein the left and right primary levers have first through holes formed in the other ends thereof with vertically penetrating,
the left and right secondary levers have second through holes formed in central portions thereof with vertically penetrating,
the upper j oint or the lower j oint has an insert protrusion formed thereon to pass through the first through hole and the second through hole, and
the lower joint or the upper joint has an insert groove formed therein corresponding to the insert protrusion.

4. The wiper for a vehicle according to any one of claims 1 to 3, wherein the coupling clips respectively formed at both ends of the left and right secondary levers comprises:
a guide part having two branched sections which extend outward from the both ends of the left and right secondary levers in a predetermined length along a longitudinal direction of the secondary lever, and is formed in a shape in which a width between the branched sections is increased outward from the both ends of the secondary levers; and
a clip hole formed between the branched sections of the guide part adjacent to the both ends of the secondary lever while one side thereof is opened toward the guide part to define an opening, in a shape whose diameter is decreased outward from the both ends of the secondary lever, so that the coupler guided by the guide part is inserted and fixed.

5. The wiper for a vehicle according to claim 4, wherein the coupler comprises:
a coupling part formed thereon with protruding upward from an upper end of the tertiary lever; and
a latch part which is formed thereon with extending upward from an upper side of the coupling part, and has a larger diameter than the coupling part, so as to prevent the left and right secondary levers from being detached upward.

6. The wiper for a vehicle according to claim 5, wherein, when arranging the left and right secondary levers and the tertiary lever to be orthogonal to each other, the coupling part is formed to have a diameter in a longitudinal direction of the tertiary lever smaller than the diameter of the clip hole, so as to fit the guide part into the clip hole through the guide part, and
in a state in which the coupling part is fitted into the clip hole, when rotating the left and right secondary levers or the tertiary lever to arrange the left and right secondary levers and the tertiary lever on the same line, the coupling part is formed to have a diameter in a width direction of the tertiary lever larger than the diameter of the clip hole, thus to prevent the coupling part from being separated from the clip hole.
